# EUROPÄISCHE PATENTSCHRIFT

(11) **EP 0 842 847 B1**
(45) Veröffentlichungstag und Bekanntmachung des Hinweises auf die Patenterteilung: **28.04.2004**
(21) Anmeldenummer: 97119213.3
(22) Anmeldetag: 04.11.1997
(51) Int. Cl.: B64D 13/00, B01D 53/34

(54) **System zur Luftversorgung von Druckkabinen bei Fluggeräten**
Air supply system for aircraft pressure cabins
Système d'alimentation en air de cabines pressurisées d'aéronefs

(30) Priorität: 06.11.1996 DE 19645764
(43) Veröffentlichungstag der Anmeldung: 20.05.1998
(73) Patentinhaber: Huf, Hans-Joachim, Dr., 55130 Mainz (DE)
(72) Erfinder: Huf, Hans-Joachim, Dr., 55130 Mainz (DE)
(74) Vertreter: Blumbach, Kramer & Partner GbR

(56) Entgegenhaltungen:
- EP-A- 0 129 304
- GB-A- 2 275 997
- US-A- 4 681 602

## Beschreibung

Die Erfindung betrifft ein System zur Luftversorgung nach dem Oberbegriff des Anspruchs 1, bekannt z.B. aus US-A-4 681 602.

Die moderne Luftfahrt mit schnellen, hochfliegenden Flugzeugen benötigt Druckkabinen. Bei Langstreckenflügen bewegt sich die Flughöhe bei ca. 30.000 Fuß entsprechend ca. 10.000 m Höhe. Da der Außendruck bei 10.000 m Höhe nur noch ca. 265 mb beträgt, ist unter Annahme des annähernd gleichen Mischungsverhältnisses wie unter Meereshöhe der Sauerstoff-Partialdruck nur noch ca. 77 mb. In dieser dünnen Luft können Menschen nicht überleben, und daher sind Flugzeuge mit Druckkabinen ausgerüstet.

In der Druckkabine wird zur Zeit ein Druck von ca. 737 mb entsprechend einer Höhe von ca. 8500 Fuß = ca. 2600 m eingestellt. Dieser höhere Innendruck der Kabine stellt an die Konstruktion erhebliche Anforderungen. So wird beispielsweise die Außenhaut des Flugzeugs aufgebläht, also nach außen gedrückt.

Aus Wirtschaftlichkeitsgründen (geringerer Luftwiderstand und damit geringerer Treibstoffverbrauch) wäre eine noch größere Flughöhe angezeigt. Dies würde jedoch die Außenhaut der Flugzeuge noch mehr belasten, so daß diese stärker ausgelegt werden müßte, was wiederum mehr Gewicht bedeutet und dann wieder geringere Wirtschaftlichkeit.

Eine Alternative besteht darin, den Kabinendruck auf z.B. 5000 m Höhe = ca. 16.400 Fuß entsprechend einem Luftdruck von 540 mb zu reduzieren. Bei diesem Druck herrscht ein Sauerstoff-Partialdruck von ca. 113 mb, gegenüber 213 mb bei NO = 1013 mb. Der dadurch bedingte Sauerscoffmangel kann bei vielen Menschen zu Ohnmacht führen. Der akute Sauerstoffmangel bei Druckverlust und die dadurch bedingte Ohnmacht sind auch der Grund dafür, daß bei Druckverlust in der Kabine Sauerstoffmasken aus Halterungen über den Sitzen der Fluggäste herunterfallen und die Fluggäste so mit Sauerstoff versorgt werden.

Der Erfindung liegt die Aufgabe zugrunde, den Innendruck in einer Druckkabine und damit den Unterschied zwischen dem Innen- und Außendruck hochfliegender Flugzeuge zu verringern, ohne daß nachteilige Folgen bei den Passagieren in der Druckkabine auftreten. Die Lösung der Aufgabe ist im Patentanspruch 1 gekennzeichnet.

Dadurch, daß die Frischluft mit Sauerstoff angereichert ist, beispielsweise auf eine Sauerstoff-Konzentration von ca. 40 % bei einem Kabinendruck von ca. 540 mb entsprechend einer Höhe von 5000 m = 16.400 Fuß entspricht der Sauerstoff-Partialdruck einem wesentlich höheren Wert, beispielsweise ca. 216 mb. Das ist mehr, als wenn sich das Flugzeug auf dem Boden befindet. Auf diese Weise wird ein Sauerstoffmangel bei den Passagieren vermieden, und es treten keine Nachteile, beispielsweise Übelkeit, auf.

Durch den verringerten Kabinendruck kann das Flugzeug bei gleicher Sicherheit leichter gebaut werden oder höher fliegen, was aus besagten Gründen zu erhöhter Wirtschaftlichkeit führt.

Weiterbildungen der Erfindung sind Gegenstand der Unteransprüche. So ist es besonders vorteilhaft, wenn die Vorrichtung zur Sauerstoffanreicherung wenigstens ein Membranmodul zur Abtrennung des Sauerstoffanteils aus der Außenluft umfaßt. Dabei kann das Membranmodul eine Hohlfasermembran enthalten. Die Hohlfasermembrantechnik ist an sich bekannc und wird auf anderen Gebieten angewendet. Mit dieser Technik ist es möglich, den Stickstoff aus der Luft preiswert abzutrennen, anders gesagt, den Sauerstoffgehalt anzureichern. Solche Module und Anlagen werden beispielsweise von den Firmen Aquilo Gas Separation B.V. (Niederlande), Permea Inc. (St. Louis, Missouri) und Generon Systems (Houston, Texas) angeboten.

Hierbei wird das physikalische Phänomen ausgenutzt, daß unterschiedliche Gase der Luft mit unterschiedlicher Geschwindigkeit durch eine Membran diffundieren. Wird beispielsweise komprimierte Luft durch die Fasern gepreßt, dann passieren die schnellen Gase, wie Sauerstoff, Kohlendioxid, Wasserdampf, die Hohlfasermembran schneller als der relativ langsame Stickstoff. Man erhält auf einfache und kostengünstige Weise mit Sauerstoff angereicherte Luft, wobei die Ausbeute abhängig von der jeweiligen Membran, dem angewendeten Druck und der Temperatur ist. Die gewonnene, sauerstoffangereicherte Luft ist außerdem nach der Diffusion durch die Membran absolut staubfrei und frei von Keimen. Ein weiterer Vorteil ist, daß die eingesetzte Hohlfasermembrantechnik absolut wartungsfrei ist, weil sie keine beweglichen Teile aufweist.

Zur Erhöhung der Ausbeute an sauerstoffangereicherter Luft wird der Anreicherungsvorrichtung zweckmäßig eine Vorrichtung zur Komprimierung der Luft auf beispielsweise 12 bar vorgeschaltet. Der Kabineninnendruck wird mit Vorteil durch eine Steuerungsvorrichtung in Abhängigkeit von einem vorbestimmten Sauerstoff-Partialdruck in der Druckkabine eingestellt.

Zur Einsparung von Sauerstoff kann zweckmäßig eine Vorrichtung zur Aufbereitung und Rückführung verbrauchter Kabinenluft zu der für die Frischluftherstellung verwendeten Außenluft vorgesehen sein.

Die Zeichnungen zeigen:
- Fig. 1: schematisch einen Querschnitt durch die Druckkabine eines Flugzeugs,
- Fig. 2: schematisch ein erfindungsgemäßes Funktionsprinzip der Luftversorgung einer Druckkabine nach Fig. 1 und
- Fig. 3: schematisch die Wirkungsweise eines Membranmoduls.

Ein Flugzeugrumpf weist umlaufende Spanten 1 auf, die durch eine vernietete Außenhaut 2 aus Aluminium luftdicht abgedeckt werden. Das Innere der so gebildeten Druckkabine 3 wird durch einen oder mehrere Zwischenböden 4, Trennwände und dergleichen (nicht dargestellt) in einzelne Bereiche aufgeteilt, die jedoch alle unter dem gleichen Druck stehen.

Bei einem Flug in großer Höhe ist der Außendruck wesentlich geringer als der für das Wohlbefinden der Passagiere erforderliche Innendruck in der Kabine, so daß die Außenhaut 2 mit den Spanten 1 wegen der großen Flächen starken, nach außen wirkenden Kräften ausgesetzt sind, die symbolisch durch die Pfeile 5 dargestellt sind.

Wenn entsprechend der Erfindung durch Erhöhung des Sauerstoff-Partialdrucks in der Kabine der Innendruck in der Kabine abgesenkt werden kann, ohne das Wohlbefinden der Passagiere zu beeinträchtigen, so nehmen die auf die Außenhaut 2 und die Spanten 1 wirkenden Kräfte 5 entsprechend ab. Das Flugzeug kann dann bei gleicher Sicherheit höher fliegen, bis wieder die alte Differenz zwischen Innen- und Außendruck hergestellt ist, oder es kann auch bei gleicher Flughöhe und gleicher Sicherheit der Konstruktionsaufwand für die Spanten 1 sowie auch die Außenwand 2 verringert werden. In beiden Fällen erhöht sich die Wirtschaftlichkeit, weil bei größerer Flughöhe der Luftwiderstand und damit der Treibstoffverbrauch abnehmen bzw. bei verringertem Konstruktionsaufwand das Gewicht kleiner wird. Dieses eingesparte Gewicht kann zum Transport von Nutzlasten (Passagiere, Fracht) genutzt werden.

Eine Verringerung der Druckdifferenz zwischen dem Innen- und dem Außendruck ist auch deswegen vorteilhaft, weil bei einem Unfall mit Undichtwerden der Druckkabine ein Druckausgleich schneller und mit weniger schwerwiegenden Folgen für die Passagiere erreicht wird.

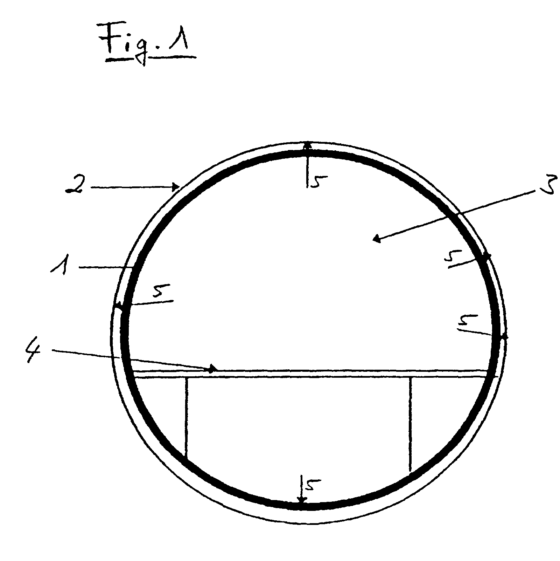

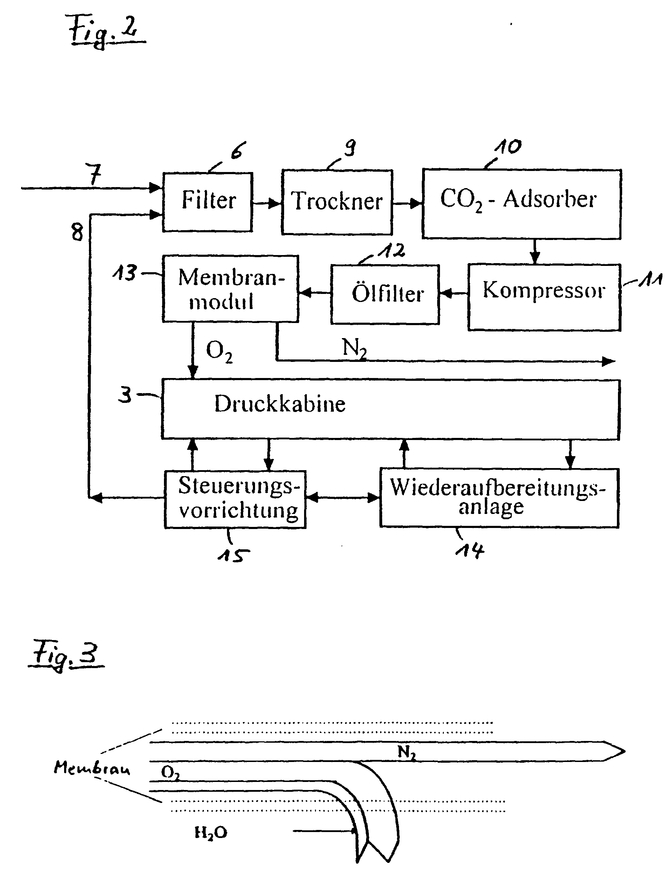

Nachfolgend wird auf Fig. 2 in Verbindung mit Fig. 3 Bezug genommen; dargestellt ist eine Prinzipskizze eines Kreislaufs zur Herstellung sauerstoffangereicherter Luft und zur Luftversorgung einer Druckkabine 3 eines Flugzeuges. Ein Staubfilter 6 fängt zunächst Partikel aus Luft ab, die Außenluft 7 aus einer Staudruckeinrichtung und aus dem Kompressor einer Turbine sowie aufbereitete Luft 3 aus der Druckkabine 3 enthält. Ein daran angeschlossener Trockner 9 trocknet die vorfiltrierte Luft je nach gewünschter Luftfeuchtigkeit. Anschließend entzieht ein Kohlendioxidadsorber 10 der Luft das Kohlendioxid auf bekannte Weise. Die Ausbeute und Menge an Sauerstoff nach einem Diffundieren durch ein Hohlfasermembranmodul 13 ist vom angewandten Druck und der Temperatur abhängig. Aus diesem Grund sind vor dem Hohlfasermembranmodul 13 ein Kompressor 11 und ein Ölfilter 12, um die Membran nicht unnötig durch Öl aus dem Kompressor zu belasten, angeordnet. Das Membranmodul 13 weist viele gebündelte kapillare Hohlfasern auf. Unter Ausnutzung des physikalischen Phänomens, das die verschiedenen Gase der Luft mit unterschiedlichen Geschwindigkeiten durch eine Membran diffundieren, wird die im Kompressor 11 verdichtete Luft durch die Fasern der Membran gepreßt, wobei die schnellen Gase Sauerstoff (O₂) und Wasserdampf (H₂O-Dampf) (Kohlendioxid wird der Luft bereits im Adsorber 10 entzogen) schneller durch die Membran diffundieren als der relativ langsame Stickstoff (N2).

Diese Wirkungsweise ist schematisch in Fig. 3 dargestellt, wobei der durch den Einsatz der Hohlfasermembrantechnik anfallende Stickstoff in die Atmosphäre abgegeben wird. Das System unter Verwendung der Kapillartechnik weist keine beweglichen Teile auf und ist dadurch wartungsfrei.

Wird die Luft z.B. mit einem Druck von 12 bar und einer Temperatur von 20°C durch die Fasern der Membran gepreßt, erhält man ca. 40 % Sauerstoff im sogenannten Permeat, dem Endprodukt des Membranmoduls 13. Diese sauerstoffreiche Luft ist wegen der Diffusion durch die Membran, absolut staubfrei und frei von irgendwelchen Keimen.

Eine Wiederaufbereitungsanlage 14, die einen Luftreiniger, einen Geruchsabsorbierer und ein Klimagerät umfaßt, bereitet die verbrauchte Luft der Druckkabine 3 wieder auf. Eine Steuerungsvorrichtung 15 überwacht den Sauerstoff-Partialdruck in der Druckkabine 3, stellt den für einen vorbestimmten Partialdruck erforderlichen Habinen-Innendruck ein und sorgt für die Rückführung eines regulierbaren Teils der aufbereiteten Luft zu dem Filter 6.

## Patentansprüche

1. System (6, 9, 10, 11, 12, 13, 14, 15) zur Luftversorgung von Druckkabinen (3) bei Fluggeräten, wobei die der Druckkabine (3) zugeführte Frischluft gefilterte, gereinigte und von Schadstoffen, insbesondere von Ozon und Kohlendioxid befreite Außenluft (7) enthält, wobei das System (6, 9, 10, 11, 12, 13, 14, 15) eine Vorrichtung (13) zur Sauerstoffanreicherung der Frischluft enthält, **gekennzeichnet durch** eine Steuerungsvorrichtung (15), mit der der Kabinendruck in Abhängigkeit von einem vorbestimmten Sauerstoff-Partialdruck in der Druckkabine (3) einstellbar ist.

2. System (6, 9, 10, 11, 12, 13, 14, 15) nach Anspruch 1,
**dadurch gekennzeichnet, daß** die Vorrichtung zur Sauerstoffanreicherung wenigstens ein Membranmodul (13) zur Abtrennung des Sauerstoffanteils aus der Außenluft (7) umfaßt.

3. System (6, 9, 10, 11, 12, 13, 14, 15) nach Anspruch 2,
**dadurch gekennzeichnet, daß** das Membranmodul (13) eine Hohlfasermembran umfaßt.

4. System (6, 9, 10, 11, 12, 13, 14, 15) nach Anspruch 1, 2 oder 3,
**dadurch gekennzeichnet, daß** der Vorrichtung zur Sauerstoffanreicherung eine Vorrichtung (11) zur Komprimierung der Luft vorgeschaltet ist.

5. System (6, 9, 10, 11, 12, 13, 14, 15) nach einem der Ansprüche 1 bis 4,
**gekennzeichnet durch** eine Vorrichtung (14, 15) zur Aufbereitung und Rückführung verbrauchter Kabinenluft zu der für Frischluftherstellung verwendeten Außenluft (7).

## Claims

1. An air supply system (6, 9, 10, 11, 12, 13, 14, 15) for aircraft pressure cabins (3), wherein the fresh air fed to the pressure cabin (3) contains filtered and purified external air (7) from which noxious substances, particularly ozone and carbon dioxide, have been removed, the system (6, 9, 10, 11, 12, 13, 14, 15) contains a device (13) for oxygen enrichment of the fresh air, **characterised by** a control device (15) by means of which the cabin pressure is adjustable in dependence on a predetermined oxygen partial pressure in the pressure cabin (3).

2. A system (6, 9, 10, 11, 12, 13, 14, 15) according to claim 1, **characterised in that** the device for oxygen enrichment comprises at least one membrane module (13) for separating the oxygen component out of the external air (7).

3. A system (6, 9, 10, 11, 12, 13, 14, 15) according to claim 2, **characterised in that** the membrane module (13) comprises a hollow fibre membrane.

4. A system (6, 9, 10, 11, 12, 13, 14, 15) according to claim 1, 2 or 3, **characterised in that** the device (11) for compressing the air is disposed upstream of the oxygen enrichment device.

5. A system (6, 9, 10, 11, 12, 13, 14, 15) according to any one of claims 1 to 4, **characterised by** a device (14, 15) for preparing and returning used cabin air to the external air (7) used for the fresh air preparation.

## Revendications

1. Système (6, 9, 10, 11, 12, 13, 14, 15) destiné à l'alimentation en air de cabines pressurisées (3) d'aéronefs, l'air frais amené à la cabine pressurisée (3) contenant de l'air extérieur (7) filtré, épuré et débarrassé de substances nocives, notamment d'ozone et de dioxyde de carbone, le système (6, 9, 10, 11, 12, 13, 14, 15) comportant un dispositif (13) destiné à l'enrichissement en oxygène de l'air frais, **caractérisé par** un dispositif de commande (15), avec lequel la pression de la cabine peut être réglée en fonction d'une pression partielle prédéterminée d'oxygène régnant dans la cabine pressurisée (3).

2. Système (6, 9, 10, 11, 12, 13, 14, 15) selon la revendication 1, **caractérisé en ce que** le dispositif destiné à l'enrichissement en oxygène comporte au moins un module à membrane (13) pour la séparation de la composante oxygène de l'air extérieur (7).

3. Système (6, 9, 10, 11, 12, 13, 14, 15) selon la revendication 2, **caractérisé en ce que** le module à membrane (13) comporte une membrane à fibres creuses.

4. Système (6, 9, 10, 11, 12, 13, 14, 15) selon la revendication 1, 2 ou 3, **caractérisé en ce qu'**un dispositif (11) de compression d'air est placé en amont du dispositif destiné à l'enrichissement en oxygène.

5. Système (6, 9, 10, 11, 12, 13, 14, 15) selon l'une quelconque des revendications 1 à 4, **caractérisé par** un dispositif (14, 15) destiné au traitement et au recyclage d'air vicié de la cabine vers l'air extérieur (7) utilisé pour la production d'air frais.
